# EUROPEAN PATENT SPECIFICATION

(11) **EP 0 562 656 B1**
(45) Date of publication and mention of the grant of the patent: **27.12.1995**
(21) Application number: 93200658.8
(22) Date of filing: 08.03.1993
(51) Int. Cl.: B29C 33/20, B29C 41/04

(54) **Mould opening and closing device**
Einrichtung zum Öffnen und Schliessen einer Form
Dispositif d'ouverture et de fermeture de moule

(30) Priority: 23.03.1992 NL 9200523
(43) Date of publication of application: 29.09.1993
(73) Proprietor: FUSION KUNSTSTOFFEN B.V., NL-7418 BB Deventer (NL)
(72) Inventor: van Tillo, Paulus Hendrik Maria, NL-7475 PV Markelo (NL)
(74) Representative: Hooiveld, Arjen Jan Winfried

(56) References cited:
- EP-A- 0 227 365
- FR-A- 1 173 486
- GB-A- 2 235 151
- US-A- 3 175 250
- US-A- 3 856 452

## Description

The invention relates to a device for manufacturing objects, provided with at least two mould parts, which form part of a single mould to be used for forming an object, said mould parts being supported by frame parts, which are movable relatively to each other in such a manner that the mould parts can be moved in a direction away from each other and in a direction towards each other for opening or closing the mould respectively, whilst at least one of said mould parts can move out resiliently with respect to the frame part supporting said mould part.

Such a device is known from US Patent No. 3,175,250. In this known device a plurality of first mould parts are secured to a plate-shaped frame part. Mould parts co-operating therewith are supported by a further plate-shaped frame part, in such a manner that they can move out resiliently, perpendicularly to the plane of said plate-shaped frame part. After the plate-shaped frame parts have been positioned and secured with respect to each other in such a manner that each pair of two associated mould parts form a closed mould, the plate-shaped frame parts thus joined are moved into a rack-shaped means so as to keep the plate-shaped frame parts with the mould parts secured thereto in their desired position when objects are being formed in said moulds.

This known device can only be utilized when all mould parts are identical, whilst this construction will also be less suitable for manufacturing objects having large dimensions, because of the side-by-side arrangement of the moulds formed by the mould parts.

According to the invention the mould parts are supported by supporting members which are telescopically movable with respect to each other, whilst means are provided for locking said supporting members against movement in the opening direction of the moulds when the moulds are in their closed position.

By using the construction according to the invention also moulds built up of mould parts which are different from each other can be incorporated in the device, whereby a successive effective opening and closing of the mould parts can still be realized by moving the mould parts by means of supporting members which are telescopically movable relatively to each other. Furthermore the construction according to the invention is also well-suited for simultaneously forming objects having comparatively large dimensions, without the device being undesirably large and whereby the forces occurring in the device can be taken up in an effective manner.

The invention will be explained in more detail hereafter with reference to a possible embodiment of the construction according to the invention diagrammatically illustrated in the accompanying Figures.

Figure 1 is a diagrammatic view, partly in elevation and partly in section, of part of an embodiment of a device according to the invention.

Figure 2 is a diagrammatic view of a lifting mechanism, by means of which frame parts of the device shown in Figure 1 are movable with respect to each other.

Figure 3 is a larger-scale sectional view of a coupling piece forming part of the lifting mechanism.

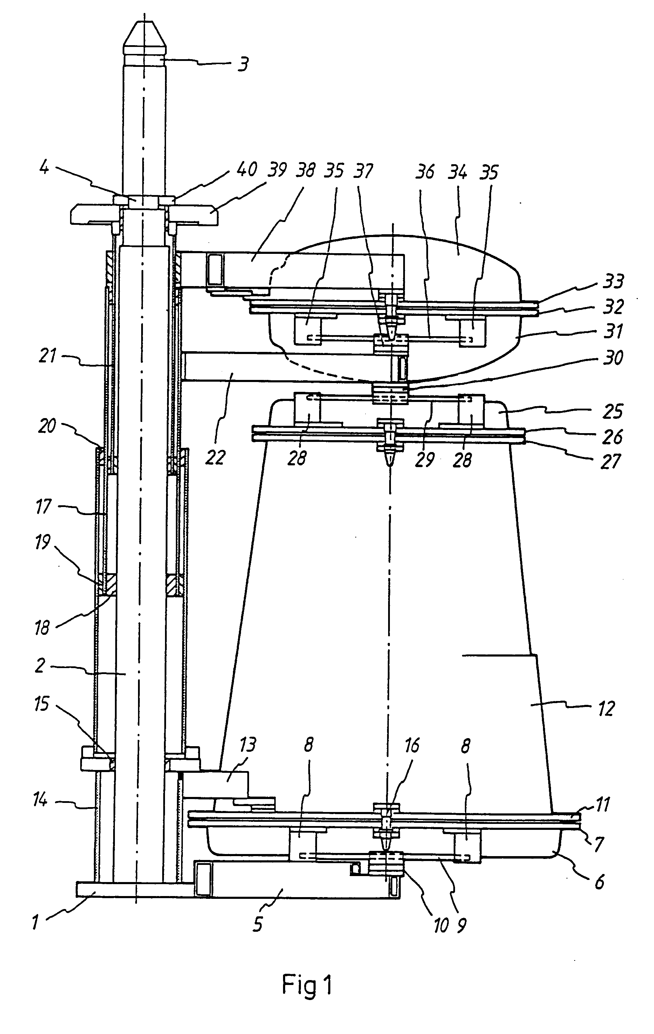

The frame of the device shown in Figure 1 comprises a baseplate 1, to which a vertically extending, seen in Figure 1, shaft 2 is secured. The diameter of the upper part of the shaft 2 is slightly smaller than that of the remaining part of the shaft 2, whilst a circular groove 3 is provided in the shaft 2, near the conical upper end of the shaft 2. At some distance from the transition between the thinner part and the thicker part of the shaft 2 a further circular groove 4 is furthermore provided in the thinner part of the shaft 2.

A frame-shaped frame part 5 concentrically surrounding the baseplate 1 is secured to the baseplate 1. Said frame part 5 functions to support a few dish-shaped mould parts 6, which are arranged around the shaft 2 in regularly spaced-apart relationship, only one of said mould parts being shown in Figure 1. Said dish-shaped mould part 6 is provided with a circumferential flange 7. Two spaced-apart supports 8 are secured to said flange, seen in Figure 1. Said supports 8 accommodate the ends of a horizontally extending, seen in Figure 1, leaf spring 9. Near its centre said leaf spring 9 is fixed to the frame part 5 by means of a support 10. At the opposite side of the mould part 6, not visible in Figure 1, the mould part 6 is supported by the frame part 5 in a similar manner.

Seen in Figure 1, a flange 11 is supported on the flange 7 provided on the upper side of the mould part 6, said flange 11 being secured to the bottom end of a conical shell 12 forming a mould part. Secured to the flange 11 are the ends of a few arms 13 (only one being shown), said ends being secured, with their ends remote from the flange 11, to a tube 14 concentrically surrounding the shaft 2 and loosely supported on the baseplate 1 with its bottom end. At some distance from its bottom end the tube 14 is provided with a guide ring 15 surrounding the shaft 2, so as to maintain the tube 14 in its correct position with respect to the shaft 2.

Centering pins 16 secured to the flange 11, which are passed through holes provided in the flange 7, ensure the correct positioning of the mould part 12 with respect to the mould part 6. Between said flanges 7 and 11 sealing rings or the like (not shown) may be provided.

Inside the tube 14 a further tube 17 is telescopically movable. A guide ring 18, located inside the tube 17, is provided near the lower end of the tube 17 so as to support the bottom end of the tube 17 on the shaft 2. The bottom end of the tube 17 is furthermore surrounded by a guide ring 19 located between the outer circumference of the tube 17 and the inner circumference of the tube 14. A guide ring 20 is also provided between the upper end of the tube 14 and the outer circumference of the tube 17.

Inside the tube 17 a further tube 21 is accommodated, said further tube being telescopically movable within the tube 17, whereby, as will be apparent from Figure 1, also here guide rings are provided for guiding the tube 21 with respect to the shaft 2 and the tube 17.

Frame parts 22, radially extending in outward direction, are secured to the outer circumference of the tube 17, said frame parts functioning to support dish-shaped mould parts 25 to be placed on the upper ends of the mould parts 12. Each dish-shaped mould part 25 is provided with a flange 26 near its bottom end, said flange being supported on a flange 27 provided on the upper part of the mould part 12, with the possible interposition of sealing means (not shown).

Supports 28 are secured to the flange 26 of the dish-shaped mould part 25 in a similar manner as described above in relation to the dish-shaped mould part 6, the ends of a horizontally extending leaf spring 29 being accommodated in said supports. Near its centre the leaf spring 29 is secured to the frame parts 22 by means of a support 30.

The frame part 22 likewise functions to support a plurality of dish-shaped mould parts 31 arranged around the shaft 2, which are provided with flanges 32. Each dish-shaped mould part forms a mould in combination with a further similar mould part 34 provided with a flange 33, whereby the flanges 32 and 33 are supported on each other in the manner shown in Figure 1, with the possible interposition of sealing means (not shown).

Also the flange 32 of the mould 31 has supports 35 secured thereto, which supports accommodate the ends of horizontally extending leaf springs 36. Near their centres said leaf springs are secured to the frame parts 22 by means of supports 37.

The dishes 34 are secured to a frame part 38 surrounding the upper end of the tube 21 and being secured to said tube.

In the position shown in Figure 1 the tubes 21, 17 and 14, which are telescopically movable with respect to each other, are moved down-wards with respect to each other, in such a manner, that the mould parts 6, 12 and 25 forming one mould as well as the mould parts 31 and 34 forming one mould may abut against each other under pre-compression under the influence of the respective spring means. Formed by the leaf springs 9, 29 and 36 in order to retain the parts that are telescopically movable with respect to each other in this position, a supporting plate 39 is secured to the upper end of the tube 21, said plate supporting a few radially movable latches 40. In the position shown in Figure 1 the ends of said latches 40 engage the circular groove 4 provided in the shaft 2, so that the tube 21 cannot be moved upwards with respect to the shaft 2.

In the present case the device, which is only partially and diagrammatically illustrated in Figure 1, forms part of a device suitable for so-called rotation casting. The baseplate 1 is thereby secured to a supporting structure (not shown), which is rotatable about two axes intersecting or crossing one another. Prior to the moulds being closed an amount of thermoplastic powdery material is introduced into the respective moulds, and the closed moulds are rotated about the two axes of rotation in an oven for some time. Hollow objects will then be formed from said powdery thermoplastic material in the moulds.

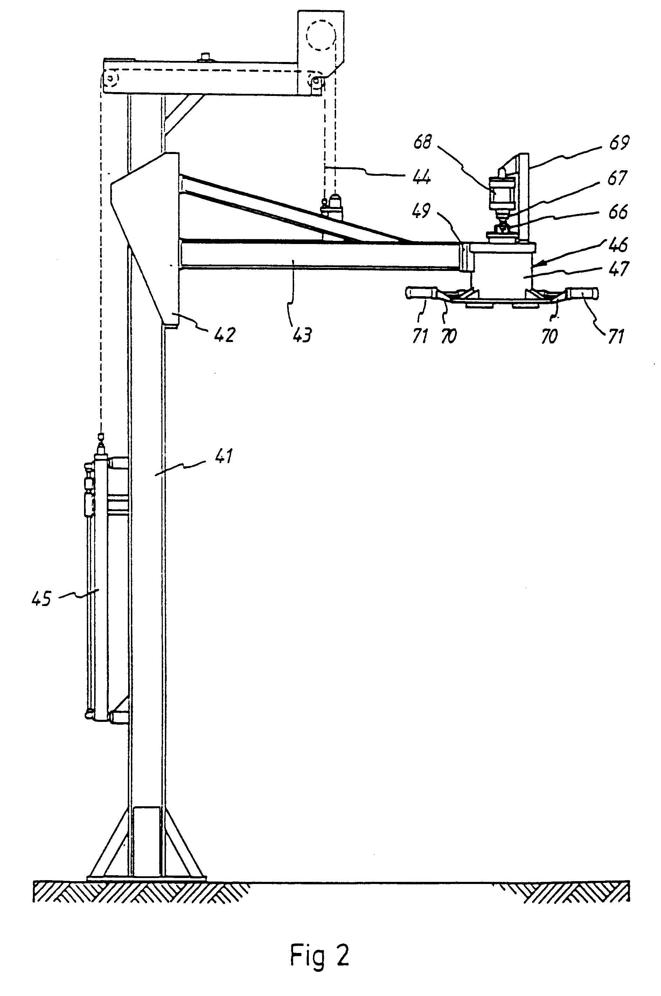

For opening the moulds, with a view to removing therefrom the objects formed in the moulds, the lifting mechanism shown in Figure 2 is used. Said lifting mechanism comprises a vertically upright column 41, along which a trolley 42 is movable. An arm 43 is secured to the trolley 42. Said arm is engaged by the end of a chain or cable 44 or the like. The other end of said chain or cable 44 or the like is connected to a setting cylinder 45 comprising a hoisting mechanism, which is connected to the column 41 by means of which the arm 43 can be moved up and down along the column 41 via the chain 44.

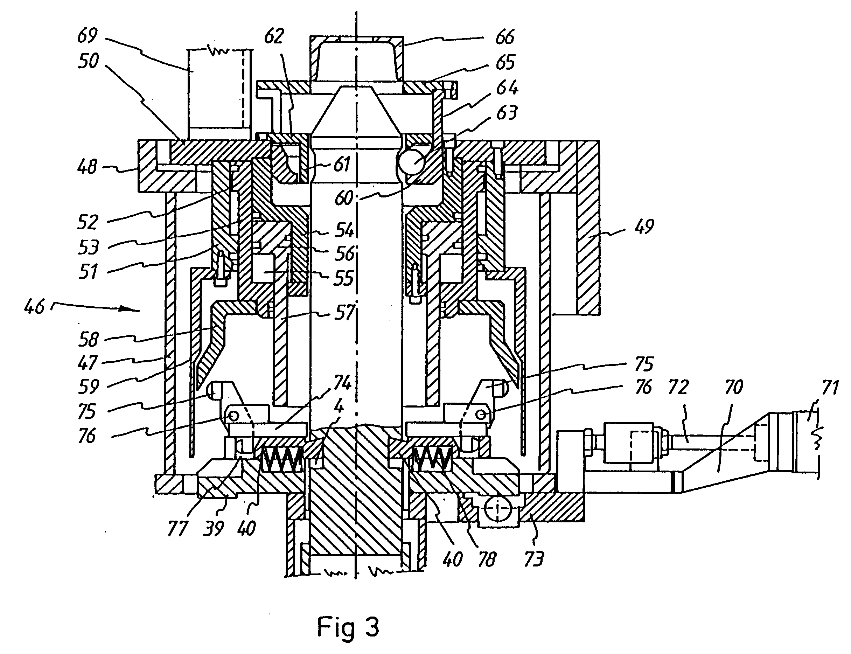

A coupling piece 46, which is illustrated in more detail in sectional view in Figure 3, is secured to the free end of the arm 43. Said coupling piece 46 comprises a tubular housing 47, to whose upper end a circular flange 48 of L-shaped section is secured. Said tubular housing 47 is secured to the end of the arm 43 by means of a mounting plate 49.

The upper side of the housing 47 is covered by an annular plate 50 supported by the flange 48. The upper end of a cylinder jacket 51 located inside the housing 47 is secured to said plate 50. An annular piston 52 is located within the cylinder jacket 51, said piston being integral with a piston skirt 53 having a smaller diameter, which projects under the piston 52 and under the bottom end of the cylinder jacket 51.

A stepped jacket 54 is located inside the annular piston 52 and the piston skirt 53, the upper part of said jacket having the larger diameter at its upper edge being secured to the plate 50. The lower part of the jacket 54 having a smaller diameter forms a cylinder space 55 , in conjunction with the piston skirt 53, an annular piston 56 being accommodated in said cylinder space. A piston skirt 57 integral with the annular piston 56 joins the bottom end of said annular piston, said piston skirt 57 extending some distance beyond the bottom end of the piston skirt 53.

A bell-shaped jacket 58 surrounding the piston skirt 57 is secured to the bottom end of the piston skirt 57. Said bell-shaped jacket 58 is in turn surrounded by a protective jacket 59 secured to the bottom end of the cylinder jacket 51.

An annular part 60 is movably accommodated in the cup-shaped space defined by the upper part of the stepped jacket 54.

As is apparent in particular from the left-hand part of Figure 3, the upper part of the internal boundary plane of the annular part 60 is frustoconical and blends into a plane which is slightly curved.

The annular part 60 surrounds a ring 61, which is provided with a flange 62 at its upper end, by means of which the ring 61 is fixed to the plate 50. A plurality of locking balls 63 is accommodated in the interior of the annular part 60, said locking balls likewise being located in holes provided in the ring 61. The flange 62 is provided with recesses for passing connecting legs 64 secured to the upper edge of the annular part 60, said legs at their upper ends being secured to a plate 65 located some distance above the plate 50. The end of a piston rod 67 (Figure 2) of a setting cylinder 68 is connected to the plate 65, and thus to the annular part 60, by means of a U-shaped connected piece 66 secured to the plate 65. The setting cylinder 68 is in turn secured to the plate 50 by means of a support 69.

Setting cylinders 71, which extend in radial direction with respect to the central axis of the housing, are secured to the bottom end of the housing 47 by means of supports 70. The piston rods 72 of said setting cylinders are connected to fingers 73, which can be moved to and fro in radial direction with respect to the central axis of the housing 47 by means of the setting cylinders 71.

As is furthermore apparent from Figure 3, a further supporting plate 74 is provided above the latches 40 supported by the supporting plate 39, said supporting plate 74 supporting a number of levers 75, which are rotatable about pivot pins 76. The bottom ends of the levers 75 are located in recesses 77 provided in the latches 40, whilst in the position shown in Figure 3 the upper ends of the levers 75 are located near the bottom end of the bell-shaped jacket 58.

In order to be able to release the engagement between the mould parts shown in Figure 1 and to vertically move said parts with respect to each other, the coupling piece 46 is pushed on the thinner upper end of the shaft 2 in the manner illustrated in Figure 3. When the coupling piece 46 is being pushed on, the annular part 60 does not occupy the position shown in Figure 3, but this annular member is located under the space accommodating this annular part, so that the balls 63 can move out in radial direction. After the coupling piece 46 has been moved to the position shown in Figure 3 with respect to the upper end of the shaft 2, however, the annular part 60 is pulled up by means of the setting cylinder 68 (Figure 2), as a result of which the balls 63 are forced into the groove 3 provided in the upper end of the shaft 2 and the coupling piece 46 is locked relatively to the shaft 2.

Then a pressurized fluid is supplied to the space above the annular piston 56, as a result of which the annular piston 56 and the piston skirt 57 connected thereto will move downwards. Via the supporting plates 74 and 39 the telescopic tubes 21, 17 and 14 are thereby caused to slide one into another along a small distance, which is allowed by the leaf springs 9, 29 and 36 that are used. When the uppermost telescopic tube 21, seen in Figure 1, has thus been moved down a little, a pressurized fluid is admitted above the annular piston 52, as a result of which the piston skirt 53 and the bell-shaped jacket 58 secured thereto are moved down, seen in Figure 3. The upper ends of the levers 75 will thereby touch the inside wall of the bell-shaped jacket 58 and be pivoted about the pins 56 in such a manner, that the ends of the levers accommodated in the recesses 77 of the latches 40 move radially outwards with respect to the upper end of the shaft 2. It will be apparent, that the latches 40 will also be moved radially outwards, against the action of the springs 78 loading said latches, with respect to the upper end of the shaft 2, as a result of which the ends of said latches can be retracted from the groove 4 provided in the shaft 2.

Also the fingers 73 are moved by means of the setting cylinders 71, from a position in which they are located spaced apart from the outer circumference of the supporting plate 39 to the position shown in Figure 3, wherein said fingers 73 are located under the supporting plate 39.

After that the annular part 60 is moved, by means of the setting cylinder 68, to its lowermost position shown in Figure 3 again, so that the balls 63 can move out radially into the groove 3 provided in the shaft 2. After the coupling piece 46 has thus been disconnected from the shaft 2 again, said coupling piece 46 can be moved upwards by means of the lifting mechanism. First the tube 21 will be moved up thereby, carrying along the upper mould parts 34 supported by said tube. When the tube 21 has reached its uppermost position with respect to the tube 17, the tube 17 will likewise be moved up. The frame parts 22 and the mould parts 31 and 25 attached thereto will move upwards.

When the tube 17 is completely extended with respect to the tube 14, also the tube 14 will be carried up and with it also the mould parts 12 supported by the tube. It will be apparent, that eventually the mould parts 34 and 31 forming a mould, as well as the mould parts 6, 12 and 25 forming a mould have been moved some distance apart, so that the objects formed therein can be simply removed from the respective moulds. After that the desired moulding material can for example be cast onto the dish-shaped mould part 6 and the dish-shaped mould part 31, after which the moulds can be closed again. To this end the tubes 14, 17 and 21 are moved downwards again by means of the lifting mechanism, so that these telescopic tubes slide together again and the mould parts of the various moulds are gradually moved together. After the telescoped position has thus been reached the fingers 73 are withdrawn from under the supporting plate 39 again by means of the setting cylinders 71. After that a locking engagement is again effected in the above-described manner between the coupling piece 46 and the upper end of the shaft 2, by means of the balls 63. Then the supporting plates 77 en 39 are pushed down by means of the annular piston 56 and the piston skirt 57 with a view to further telescoping the telescopic tubes and thus stressing the leaf springs 9, 29 and 36 supporting the various mould parts, so as to press the various mould parts firmly together. After that the bell-shaped jacket can be moved up, as a result of which the latches 40 will be pressed into the groove provided in the shaft 2 again, so that then the arrangement of mould parts and frame parts supporting mould parts shown in Figure 1 has been reached again. Then the annular piston 56 with the piston skirt 57 attached thereto can be moved up again to the position shown in Figure 3. The coupling piece 46 is then disconnected from the shaft 2 by moving down the annular means 60. Subsequently the coupling piece can be lifted off the shaft 2 by means of the lifting mechanism and the mould assembly can be moved to the oven again.

It will be apparent that the invention may also be utilized with mould parts other than those described and depicted by way of example. Also the number of parts which are telescopically movable with respect to each other can be freely selected in dependence on the number of mould parts one wishes to superpose.

## Claims

1. A device for manufacturing objects, provided with at least two mould parts (6,12,25;31,34) which form part of a single mould to be used for forming an object, said mould parts (6,12,25;31,34) being supported by frame parts (5,13,22,38), which are movable relatively to each other in such a manner that the mould parts (6,12,25;31,34) can be moved in a direction away from each other and in a direction towards each other for opening or closing the mould respectively, whilst at least one of said mould parts (6,12,25;31,34) can move out resiliently with respect to the frame part supporting said mould part, characterized in that the mould parts (6,12,25;31,34) are supported by supporting members (14,17,21) which are telescopically movable with respect to each other, whilst means (4,39,40) are provided for locking said supporting members (14,17,21) against movement in the opening direction of the moulds when the moulds are in their closed position.

2. Device according to claim 1, characterized in that several moulds, each comprising at least two mould parts (6,12,25;31,34) are arranged one behind the other, seen in the intended direction of movement of the mould parts (6,12,25;31,34).

3. A device according to claim 1 or 2, characterized in that said mould parts (6,12,25;31,34) are supported by spring means (9,29,36) which spring in the direction of movement of said mould parts (6,12,25;31,34).

4. A device according to any one of the preceding claims, characterized in that the supporting members (14,17,21) supporting said mould parts (6,12,25;31,34) are formed by parts which are telescopically movable with respect to each other and which are concentrically arranged around a shaft (2).

5. A device according to any one of the preceding claims, characterized in that a frame part (22) supporting mould parts supports two superposed mould parts (25,31) supported by spring means (29,36), said mould parts (25,31) forming part of different moulds.

6. A device according to claim 5, characterized in that the frame part (22) supporting the two superposed mould parts (25,31) is carried along by one of said telescopically movable supporting members (17), by means of at least one carrying arm extending outwardly from said supporting member (17).

7. A device according to any of the preceding claims, characterized in that in the position in which the mould parts (6,12,25;31,34) for forming the moulds abut against each other, parts (14,17,21) being telescopically movable with respect to each other and being co-axially provided around a shaft (2), by means of which the frame parts (5,13,22,38) supporting the mould parts (6,12,25;31,34) can be moved with respect to each other, are retained between a baseplate (1), to which said shaft (2) is secured with one end, and a supporting plate (39), which is secured to an end of a part remote from said baseplate (1) and which is detachably secured to the shaft (2) by means of latches (40).

8. A device according to claim 7, characterized in that said device is provided with a coupling piece (46), which is movable by means of a lifting mechanism, said coupling piece (46) being provided with means by which the coupling (46) can be secured to an end of the shaft (2) projecting beyond said telescopically movable parts (14,17,21), as well as with means by which the latches (40) securing the supporting plate (39) to the shaft (2) can be moved out of engagement with the shaft (2), and with means by which said coupling piece (46) can be connected to the supporting plate (39).

9. A device according to claim 8, characterized in that said coupling piece (46) is provided with a vertically adjustable ring (60), within which balls (63) are located, which in a first position of the ring (60) are located inside a groove (3) provided in said shaft (2) and which in a second position of the ring are located outside the groove (3) provided in the shaft (2).

10. A device according to claim 7 or 8, characterized in that said coupling piece (46) is provided with levers (75), whose ends are located in recesses (77) provided in said latches (40) when the coupling piece (46) is secured to the shaft (2), whilst said levers (75) are pivotable by means of a bell-shaped jacket (58) accommodated in said coupling piece (46), said jacket (58) being movable in the longitudinal direction of the shaft (2) for pivoting said levers (75).

11. A device according to any one of the claims 8-10, characterized in that said coupling piece (46) is provided with a movable jacket (58), by means of which the supporting plate (39) and the tube (21) coupled thereto are movable against the action of the spring means (9,29,36) supporting said mould parts (6,12,25;31, 34).

12. A device according to any one of the preceding claims, characterized in that said coupling piece (46) is provided with setting cylinders (71), by means of which fingers (73) are adjustable between a position in which said fingers (73) engage under said supporting plate (39) and a position in which said fingers (73) are located beside said supporting plate (39), seen in the longitudinal direction of said shaft (2).

13. A device according any of the preceding claims, characterized in that by the supporting members (14,17,21) there are supported mould parts (6,12,25;31,34) which are displaced with respect to each other over an angle when seen in the direction wherein the supporting members (14,17,21) can move telescopically with respect to each other.

14. A method for manufacturing objects using a device as defined in any of the preceding claims.

## Patentansprüche

1. Eine Einrichtung zur Herstellung von Gegenständen, die mit wenigstens zwei Formteilen (6, 12, 25; 31, 34) versehen ist, die Teile einer einzigen Form bilden, die verwendet werden soll, um einen Gegenstand auszuformen, wobei besagte Formteile (6, 12, 25; 31, 34) von Gestellteilen (5, 13, 22, 38) gehalten werden, die relativ zueinander in solcher Weise bewegbar sind, daß die Formteile (6, 12, 25; 31, 34) zum Öffnen bzw. Schließen der Form in einer Richtung voneinander weg und in einer Richtung aufeinander zu bewegt werden können, während wenigstens eines von besagten Formteilen (6, 12, 25; 31, 34) sich im Hinblick auf das Gestellteil, das besagtes Formteil hält, federnd herausbewegen kann, dadurch gekennzeichnet, daß die Formteile (6, 12, 25; 31, 34) durch Trägerteile (14, 17, 21) gehalten werden, die relativ zueinander teleskopartig bewegbar sind, während Mittel (4, 39, 40) zur Verriegelung besagter Trägerteile (14, 17, 21) gegen eine Bewegung in der Öffnungsrichtung der Formen vorgesehen sind, wenn die Formen sich in ihrer geschlossenen Position befinden.

2. Einrichtung nach Anspruch 1, dadurch gekennzeichnet, daß mehrere Formen, von denen jede wenigstens zwei Formteile (6, 12, 25; 31, 34) umfaßt, in der beabsichtigten Bewegungsrichtung der Formteile (6, 12, 25; 31, 34) gesehen, hintereinander angeordnet sind.

3. Eine Einrichtung nach Anspruch 1 oder 2, dadurch gekennzeichnet, daß besagte Formteile (6, 12, 25; 31, 34) durch Federmittel (9, 29, 36) gehalten werden, die in der Bewegungsrichtung besagter Formteile (6, 12, 25; 31, 34) federn.

4. Eine Einrichtung nach einem der vorangehenden Ansprüche, dadurch gekennzeichnet, daß die Trägerteile (14, 17, 21), die besagte Formteile (6, 12, 25; 31, 34) halten, durch Teile gebildet werden, die relativ zueinander teleskopartig bewegbar und konzentrisch um eine Säule (2) herum angeordnet sind.

5. Eine Einrichtung nach einem der vorangehenden Ansprüche, dadurch gekennzeichnet, daß ein Gestellteil (22), das Formteile hält, zwei übereinanderliegende Formteile (25, 31) hält, die von Federmitteln (29, 36) gehalten werden, wobei besagte Formteile (25, 31) Teile verschiedener Formen bilden.

6. Eine Einrichtung nach Anspruch 5, dadurch gekennzeichnet, daß das Gestellteil (22), das die zwei übereinanderliegenden Formteile (24, 31) hält, von einem von besagten teleskopartig bewegbaren Trägerteilen (17) verfahren wird, mittels wenigstens eines Tragarmes, der sich von besagtem Trägerteil (17) nach außen erstreckt.

7. Eine Einrichtung nach einem der vorangehenden Ansprüche, dadurch gekennzeichnet, daß in der Position, in der die Formteile (6, 12, 25; 31, 34) zur Bildung der Formen gegeneinanderstoßen, Teile (14, 17, 21), die relativ zueinander teleskopartig bewegbar und koaxial um eine Säule (2) herum vorgesehen sind, mittels derer die Rahmenteile (5, 13, 22, 38), die die Formteile (6, 12, 25; 31, 34) halten, relativ zueinander bewegt werden können, zwischen einer Basisplatte (1), an der besagte Säule (2) mit einem Ende angebracht ist, und einer Halteplatte (39), die an einem Ende eines von besagter Basisplatte (1) entfernten Teiles befestigt ist und die mittels Klinken (40) lösbar an der Säule (2) befestigt sind, gehalten werden.

8. Eine Einrichtung nach Anspruch 7, dadurch gekennzeichnet, daß besagte Einrichtung mit einem Kupplungsstück (46) versehen ist, das mit Hilfe eines Hebemechanismus bewegbar ist, wobei besagtes Kupplungsstück (46) mit Mitteln versehen ist, durch die die Kupplung (46) an einem Ende der Säule (2), die über besagte teleskopartig bewegbare Teile (14, 17, 21) hinausgeht, befestigt werden kann, sowie mit Mitteln, durch die die Klinken (40), die die Halteplatte (39) an der Säule (2) sichern, außer Eingriff mit der Säule (2) bewegt werden können, und mit Mitteln, durch die besagtes Kupplungsstück (46) mit der Halteplatte (39) verbunden werden kann.

9. Eine Einrichtung nach Anspruch 8, dadurch gekennzeichnet, daß besagtes Kupplungsstück (46) mit einem vertikal verstellbaren Ring (60) versehen ist, innerhalb dessen Kugeln (63) angeordnet sind, die in einer ersten Position des Rings (60) innerhalb einer Nut (3), die in besagter Säule (2) vorgesehen ist, angeordnet sind und die in einer zweiten Position des Rings außerhalb der Nut (3), die in der Säule (2) vorgesehen ist, angeordnet sind.

10. Eine Einrichtung nach Anspruch 7 oder 8, dadurch gekennzeichnet, daß besagtes Kupplungsstück (46) mit Hebeln (75) versehen ist, deren Enden in Ausnehmungen (77), die in besagten Klinken (40) vorgesehen sind, angeordnet sind, wenn das Kupplungsstück (46) an der Säule (2) befestigt wird, während besagte Hebel (75) mittels eines glockenförmigen Mantels (58), der in besagtem Kupplungsstück (46) untergebracht ist, verschwenkbar sind, wobei besagter Mantel (58) in der Längsrichtung der Säule (2) bewegbar ist, um besagte Hebel (75) zu verschwenken.

11. Eine Einrichtung nach einem der Ansprüche 8 - 10, dadurch gekennzeichnet, daß besagtes Kupplungsstück (46) mit einem bewegbaren Mantel (58) versehen ist, mittels dessen die Halteplatte (39) und das Rohr (21), das daran gekoppelt ist, gegen die Wirkung der Federmittel (9, 29, 36), die besagte Formteile (6, 12, 25; 31, 34) halten, bewegbar sind.

12. Eine Einrichtung nach einem der vorangehenden Ansprüche, dadurch gekennzeichnet, daß besagtes Kupplungsstück (46) mit Einstellzylindern (71) versehen ist, mittels derer Finger (73) zwischen einer Position, in der besagte Finger (73) unter besagte Halteplatte (39) fassen, und einer Position, in der besagte Finger (73), in der Längsrichtung besagter Säule (2) gesehen, neben besagter Halteplatte (39) angeordnet sind, verstellbar sind.

13. Eine Einrichtung nach einem der vorangehenden Ansprüche, dadurch gekennzeichnet, daß durch die Trägerteile (14, 17, 21) Formteile (6, 12, 25; 31, 34) gehalten werden, die relativ zueinander über einen Winkel verschoben werden, wenn gesehen in der Richtung, in der die Trägerteile (14, 17, 21) sich relativ zueinander teleskopartig bewegen können.

14. Ein Verfahren zur Herstellung von Gegenständen unter Verwendung einer Einrichtung, wie sie in einem der vorangehenden Ansprüche definiert ist.

## Revendications

1. Dispositif pour la fabrication d'objets, comportant au moins deux parties de moule (6, 12, 25 ; 31, 34) qui forment une partie d'un moule unique destiné à être utilisé pour former un objet, lesdites parties de moule (6, 12, 25 ; 31, 34) étant supportées par des parties de cadre (5, 13, 22, 38) qui sont mobiles relativement l'une par rapport à l'autre de telle manière que les parties de moule (6, 12, 25 ; 31, 34) peuvent être déplacées en s'écartant l'une de l'autre et en se rapprochant l'une de l'autre pour assurer l'ouverture ou la fermeture du moule respectivement, tandis qu'au moins une desdites parties de moule (6, 12, 25 ; 31, 34) peut s'éloigner élastiquement par rapport à la partie de cadre supportant ladite partie de moule, le dispositif étant caractérisé en ce que les parties de moule (6, 12, 25 ; 31, 34) sont supportées par des organes de support (14, 17, 21) qui sont mobiles télescopiquement l'un par rapport à l'autre, tandis que des moyens (4, 39, 40) sont prévus pour verrouiller lesdits organes de support (14, 17, 21) à l'encontre d'un mouvement dans la direction d'ouverture des moules lorsque les moules sont dans leur position de fermeture.

2. Dispositif selon la revendication 1, caractérisé en ce que plusieurs moules, chacun comprenant au moins deux parties de moule (6, 12, 25 ; 31, 34) sont disposés l'un derrière l'autre, lorsqu'on regarde dans la direction de mouvement prévue des parties de moule (6, 12, 25 ; 31, 34).

3. Dispositif selon la revendication 1 ou la revendication 2, caractérisé en ce que lesdites parties de moule (6, 12, 25 ; 31, 34) sont supportées par des moyens de ressorts (9, 29, 36) qui agissent dans la direction de déplacement desdites parties de moule (6, 12, 25 ; 31, 34).

4. Dispositif selon l'une quelconque des revendications précédentes, caractérisé en ce que les organes de support (14, 17, 21) supportant lesdites parties de moule (6, 12, 25 ; 31, 34) sont formés par des parties qui sont mobiles télescopiquement l'une par rapport à l'autre et qui sont disposées concentriquement autour d'un arbre (2).

5. Dispositif selon l'une quelconque des revendications précédentes, caractérisé en ce qu'une partie de cadre (22) supportant des parties de moule supporte deux parties de moule superposées (25, 31) supportées par des moyens de ressorts (29, 36), lesdites parties de moule (25, 31) formant partie de moules différents.

6. Dispositif selon la revendication 5, caractérisé en ce que la partie de cadre (22) qui supporte les deux parties de moule superposées (25, 31) est portée tout du long par l'un des organes de support mobile télescopiquement (17), au moyen d'au moins un bras porteur s'étendant vers l'extérieur à partir dudit organe (17) de support.

7. Dispositif selon l'une quelconque des revendications précédentes, caractérisé en ce que dans la position dans laquelle les parties de moule (6, 12, 25 ; 31, 34) pour former les moules viennent buter les unes contre les autres, les parties (14, 17, 21) étant mobiles télescopiquement les unes par rapport aux autres et étant prévues coaxialement autour d'un arbre (2), par le moyen duquel les parties de cadre (5, 13, 22, 38) supportant les parties de moule (6, 12, 25 ; 31, 34) peuvent être déplacées les unes par rapport aux autres, lesdites parties sont retenues entre une plaque de base (1), à laquelle ledit arbre (2) est fixé à une de ses extrémités, et une plaque de support (39), qui est fixée à une extrémité d'une partie éloignée de ladite plaque de base (1) et qui est fixée de façon amovible à l'arbre (2) au moyen de verrous (40).

8. Dispositif selon la revendication 7, caractérisé en ce que ledit dispositif comporte une pièce d'accouplement (46) qui est mobile au moyen d'un mécanisme de levage, ladite pièce d'accouplement (46) étant prévue avec un moyen permettant la fixation de l'accouplement (46) à une extrémité de l'arbre (2) qui fait saillie au delà desdites parties mobiles télescopiquement (14, 17, 21), aussi bien qu'avec des moyens par lesquels les verrous (40) qui fixent la plaque de support (39) à l'arbre (2) peuvent être dégagés de l'arbre (2), et avec des moyens par lesquels ladite pièce d'accouplement (46) peut être reliée à la plaque de support (39).

9. Dispositif selon la revendication 8, caractérisé en ce que ladite pièce d'accouplement (46) comporte une bague réglable verticalement (60), à l'intérieur de laquelle sont disposées des billes (63), qui dans une première position de la bague (60) sont situées à l'intérieur d'une gorge (3) prévue dans ledit arbre (2) et qui dans une seconde position de la bague sont situées à l'extérieur de la gorge (3) prévue dans l'arbre (2).

10. Dispositif selon la revendication 7 ou la revendication 8, caractérisé en ce que ladite pièce d'accouplement (46) comporte des leviers (75), dont les extrémités sont disposées dans des cavités (77) prévues dans lesdits verrous (40) lorsque la pièce d'accouplement (46) est fixée à l'arbre (2), tandis que lesdits leviers (75) peuvent pivoter au moyen d'une chemise (58) en forme de cloche qui est logée dans ladite pièce d'accouplement (46), ladite chemise (58) étant mobile dans la direction longitudinale de l'arbre (2) pour faire pivoter lesdits leviers (75).

11. Dispositif selon l'une quelconque des revendications 8 à 10, caractérisé en ce que ladite pièce d'accouplement (46) comporte une chemise mobile (58), au moyen de laquelle la plaque de support (39) et le tube (21) qui y est relié sont mobiles à l'encontre de l'action des moyens de ressorts (9, 29, 36) qui supportent lesdites parties de moule (6, 12, 25 ; 31, 34).

12. Dispositif selon l'une quelconque des revendications précédentes, caractérisé en ce que ladite pièce d'accouplement (46) comporte des cylindres de réglage (71), au moyen desquels des doigts (73) peuvent être ajustés entre une position dans laquelle lesdits doigts viennent s'engager sous ladite plaque de support (39) et une position dans laquelle lesdits doigts (73) sont disposés à côté de ladite plaque support (39) lorsque l'on regarde dans la direction longitudinale dudit arbre (2).

13. Dispositif selon l'une quelconque des revendications précédentes, caractérisé en ce qu'au moyen des organes de support (14, 17, 21) sont supportées les parties de moule (6, 12, 25 ; 31, 34) qui sont déplacées les unes par rapport aux autres sur un certain angle lorsque l'on regarde dans la direction dans laquelle les organes de support (14, 17, 21) peuvent se déplacer télescopiquement les uns par rapport aux autres.

14. Procédé de fabrication d'objets utilisant un dispositif tel que défini dans l'une quelconque des revendications précédentes.
